# EUROPEAN PATENT APPLICATION

(11) **EP 4 760 448 A1**
(43) Date of publication of application: **17.06.2026**
(21) Application number: 24868465.6
(22) Date of filing: 05.08.2024
(51) Int. Cl.: G06F 1/16, H05K 5/00

(54) **FOLDABLE ELECTRONIC DEVICE COMPRISING MAGNET HAVING THROUGH-HOLE**

(30) Priority: 19.09.2023 KR 20230125152; 20.11.2023 KR 20230161310
(71) Applicant: Samsung Electronics Co., Ltd., Suwon-si, Gyeonggi-do 16677 (KR)
(72) Inventor: OH, Chanhee, Suwon-si Gyeonggi-do 16677 (KR); KIM, Byungjoon, Suwon-si Gyeonggi-do 16677 (KR); MIN, Byeonguk, Suwon-si Gyeonggi-do 16677 (KR); PARK, Junghyung, Suwon-si Gyeonggi-do 16677 (KR)
(74) Representative: Gulde & Partner
(86) International application number: PCT/KR2024/011499
(87) International publication number: WO 2025/063486

(57) **Abstract**

A foldable electronic device is disclosed. The foldable electronic device may comprise: a foldable display which forms at least a part of the front surface of a first housing and the front surface of a second housing, and is configured to be bent in a folded state of the foldable electronic device; a support member which includes a first through-hole and is arranged within the first housing to support the foldable electronic device; a magnet which includes a second through-hole and is arranged on a corner region of the support member to maintain a folded state of the foldable electronic device; a sealing member which is disposed between the foldable display and the support member; and an adhesive member for waterproofing of the electronic device, the adhesive member coming into contact with the sealing member and the foldable display.

## Description

### [Technical Field]

The present disclosure relates to a foldable electronic device including a magnet having a through hole.

### [Background Art]

A foldable electronic device may have a folded state or an opened state. A repulsive force of a foldable display in the foldable electronic device may increase in the folded state of the foldable electronic device. In order to maintain the folded state of the foldable electronic device with the increased repulsive force, the foldable electronic device may include a magnet.

The above-described information may be provided as a related art for the purpose of helping understanding of the present disclosure. No claim or determination is raised as to whether any of the above-described descriptions may be applied as a prior art related to the present disclosure.

### [Disclosure]

### [Technical Solution]

A foldable electronic device is disclosed. The foldable electronic device may include a first housing, a second housing, and a foldable display. The foldable display may form at least a portion of a front surface of the first housing and a front surface of the second housing. The foldable display may be configured to be bent in a folded state of the foldable electronic device. The foldable electronic device may further include a supporting member. The supporting member may include a first through hole. The supporting member may be disposed in the first housing to support the foldable display. The foldable electronic device may include a magnet. The magnet may further include a second through hole. The magnet may be disposed on a corner portion of the supporting member to maintain the folded state of the foldable electronic device. The foldable electronic device may further include a sealing member. The sealing member may be disposed between the foldable display and the supporting member. The foldable electronic device may include an adhesive member. The adhesive member may be contacted with the sealing member and the foldable display to isolate an internal space covered by the sealing member, the foldable display, and the supporting member from outside of the electronic device. The adhesive member may be visible from a rear surface of the supporting member through the first through hole and the second through hole.

A foldable electronic device may include a first housing and a second housing. The second housing may be pivotably coupled to the first housing. The foldable electronic device may further include a foldable display. The foldable display may form at least a portion of a front surface of the first housing and a front surface of the second housing and be configured to be bent in a folded state of the foldable electronic device. The foldable electronic device may further include a first supporting member. The first supporting member in the first housing may include a first through hole. The foldable electronic device may further include a second supporting member. The second supporting member may be disposed in the second housing. The foldable electronic device may further include a sealing member. The sealing member may be inserted into the first through hole. The foldable electronic device may further include a first magnet. The first magnet may be contacted on the first supporting member. The foldable electronic device may further include a second magnet. The second magnet may be contacted on the second supporting member and be configured to maintain the folded state of the foldable electronic device in conjunction with the first magnet. The first magnet may include a second through hole arranged with respect to the first through hole for the sealing member inserted into the first through hole.

### [Description of the Drawings]

FIG. 1A illustrates an example of an unfolded state of a foldable electronic device according to an embodiment.
FIG. 1B illustrates an example of a folded state of a foldable electronic device according to an embodiment.
FIG. 1C is an exploded view of a foldable electronic device according to an embodiment.
FIG. 2A is a diagram illustrating an exemplary disposition of components positioned on a rear surface of a supporting member of an exemplary foldable electronic device.
FIG. 2B is a diagram illustrating a front surface of a supporting member of an exemplary foldable electronic device.
FIG. 2C is a diagram illustrating a rear surface of a foldable display of an exemplary foldable electronic device.
FIG. 3 is a cross-sectional view of an exemplary foldable electronic device cut along line A-A'.
FIG. 4 is a cross-sectional view of an exemplary foldable electronic device cut along line B-B'.
FIG. 5 is a diagram illustrating disposition of a magnet in a folded state of an exemplary foldable electronic device.
FIGS. 6A, 6B, and 6C are diagrams exemplarily illustrating a relationship between a through hole of a magnet and a through hole of a supporting member.
FIGS. 7A and 7B are diagrams exemplarily illustrating a configuration of a magnet and a side wall.
FIGS. 8A and 8B are diagrams exemplarily illustrating a configuration of an exemplary side wall having a different height .
FIGS. 9A and 9B are diagrams exemplarily illustrating a configuration in which a portion of an exemplary side wall is removed.
FIG. 10 is a block diagram of an electronic device in a network environment according to various embodiments.

### [Mode for Invention]

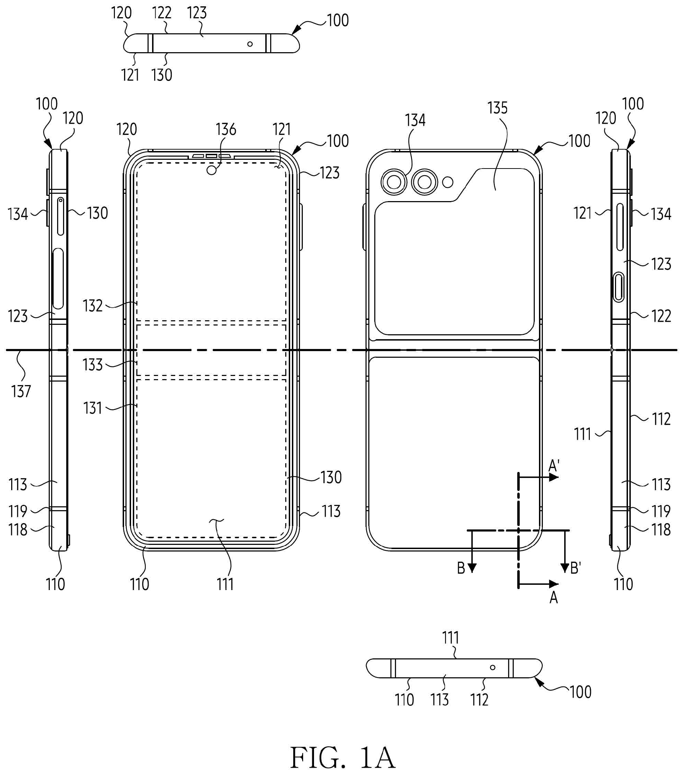

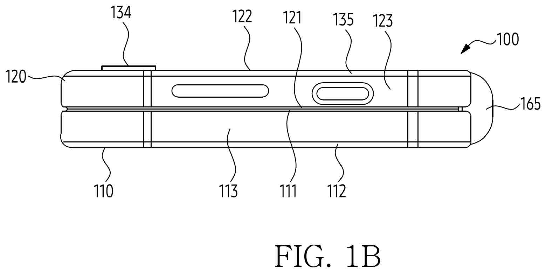

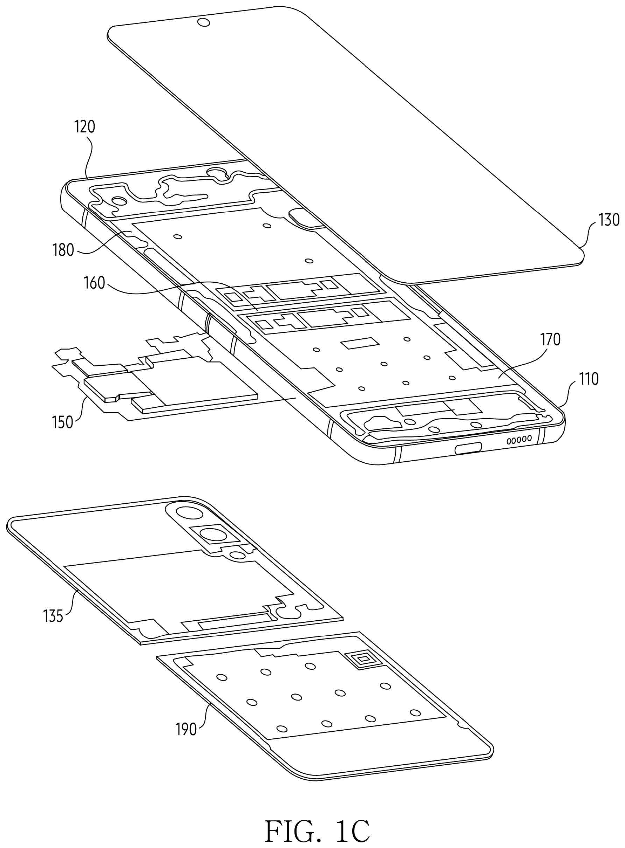

FIG. 1A illustrates an example of an unfolded state of an electronic device according to an embodiment, FIG. 1B illustrates an example of a folded state of an electronic device according to an embodiment, and FIG. 1C is an exploded view of an electronic device according to an embodiment.

Referring to FIGS. 1A, 1B, and 1C, an electronic device 100 may include a first housing 110, a second housing 120, and a foldable display 130. The electronic device 100 may be referred to as a foldable electronic device in that it is folded with respect to a folding axis 137.

The electronic device 100 may include the first housing 110, the second housing 120, a hinge structure 160, the foldable display 130, a printed circuit board 150, a display 135, and/or a rear plate 190. According to an embodiment, the electronic device 100 may omit at least one of the components or may additionally include another component.

In an embodiment, the first housing 110 may form a portion of an outer surface of the electronic device 100. The first housing 110 may include a first surface 111, a second surface 112 faced away from the first surface 111, and a first side surface 113 covering at least a portion of the first surface 111 and the second surface 112. In an embodiment, the first housing 110 may provide a space defined by the first surface 111, the second surface 112, and the first side surface 113 as a space for disposing components of the electronic device 100.

In an embodiment, a second side surface 123 may be pivotably (or rotatably) connected to the first side surface 113 through a hinge structure 160 disposed in a hinge cover 165. The hinge structure 160 may include a hinge module and a hinge plate. The hinge plate may include a first hinge plate and a second hinge plate, the first hinge plate may be connected to the first housing 110, and the second hinge plate may be connected to the second housing 120.

In an embodiment, the second housing 120 may include a third surface 121, a fourth surface 122 faced away from the third surface 121, and the second side surface 123 covering at least a portion of the third surface 121 and the fourth surface 122. The second housing 120 may provide a space defined by the third surface 121, the fourth surface 122, and the second side surface 123 as a space for disposing components of the electronic device 100.

In an embodiment, the foldable display 130 may include a window exposed toward the outside. The window may protect a surface of the foldable display 130 and be formed of a transparent member to transmit visual information provided from the foldable display 130 to the outside. The window may include a glass material such as ultra-thin glass (UTG) or a polymer material such as polyimide (PI).

In an embodiment, the foldable display 130 may form at least a portion of the first surface 111 (e.g., the front surface of the first housing 110) of the first housing 110 and the third surface 121 (e.g., the front surface of the second housing 120) of the second housing 120. The foldable display 130 may be disposed on the first surface 111 of the first housing 110 and the third surface 121 of the second housing 120 across the hinge structure 160 in the hinge cover 165. The foldable display 130 may be configured to be bent in the folded state of the electronic device 100 by the hinge structure 160. The foldable display 130 may include a first display area 131, a second display area 132, and a third display area 133. For example, the foldable display 130 may include the first display area 131 disposed on the first surface 111 of a first housing, the second display area 132 disposed on the third surface 121 of a second housing, and the third display area 133 between the first display area 131 and the second display area 132. The foldable display 130 may be supported by a first supporting member 170 of the first housing 110 and a second supporting member 180 of the second housing 120.

According to an embodiment, the foldable display 130 may include an opening formed in a portion of a screen display area, or a supporting member (e.g., a bracket) supporting the foldable display 130 may include a recess or an opening. The electronic device 100 may include at least one camera aligned with the recess or the opening. For example, the first display area 131 may further include at least one camera 136 capable of obtaining an image from the outside through a portion of the first display area 131. According to an embodiment, the at least one camera 136 may be included on a rear surface of the foldable display 130 corresponding to the first display area 131 or the second display area 132 of the foldable display 130. For example, the at least one camera 136 may be disposed under the foldable display 130 and may be covered by the foldable display 130. The at least one camera 136 may be an under display camera (UDC) that is covered by the foldable display 130 and is not exposed to the outside. However, it is not limited thereto, and the foldable display 130 may include an opening exposing the at least one camera 136 to the outside. In an embodiment, the camera 136 may obtain an image of an external environment and/or an external object through the opening.

In an embodiment, the fourth surface 122 of the second housing 120 may further include at least one camera 134 and a display 135 exposed through a portion of the fourth surface 122.

In an embodiment, the hinge structure 160 may be configured to pivotably connect the first supporting member 170 forming the first housing 110 and the second supporting member 180 forming the second housing 120.

In an embodiment, the electronic device 100 may be in one of a folded state, an unfolded state, or an intermediate state. The folded state may be a state in which the first surface 111 of the first housing 110 and the third surface 121 of the second housing 120 face each other. In the folded state, a direction in which the first surface 111 faces and a direction in which the third surface 121 faces may be opposite to each other. The unfolded state may be a state in which the first surface 111 of the first housing 110 and the third surface 121 of the second housing 120 are substantially continuous as a plane. In the unfolded state, a direction in which the first surface 111 faces and a direction in which the third surface 121 faces may be the same. The intermediate state may be a state between the unfolded state and the folded state. In the intermediate state, a direction in which the first surface 111 faces and a direction in which the third surface 121 faces may be different from each other.

In an embodiment, while the electronic device 100 is in a folded state, at least a portion of the hinge cover 165 covering the hinge structure 160 may be exposed through a space between the first housing 110 and the second housing 120. In another embodiment, while the electronic device 100 is in an unfolded state, the hinge cover 165 may be covered by the first housing 110 and the second housing 120.

In an embodiment, the electronic device 100 may be folded with respect to the hinge cover 165 or the folding axis 137 passing through the hinge structure 160. For example, in order to enable the electronic device 100 to be bent, curved, or folded, the hinge structure 160 in the hinge cover 165 may be disposed between the first housing 110 and the second housing 120 of the electronic device 100. For example, the first housing 110 may be connected to the second housing 120 through the hinge structure 160 disposed in the hinge cover 165, and may be rotated with respect to the folding axis 137.

In an embodiment, the electronic device 100, the first housing 110 and the second housing 120 may be folded so as to face each other by rotating with respect to the folding axis 137. In an embodiment, the electronic device 100, the first housing 110 and the second housing 120 may be folded so as to be stacked or overlapped each other.

The hinge structure 160 may include a hinge module and a hinge plate. The hinge module may include a hinge gear to enable the first housing 110 and the second housing 120 to be pivotable.

The first housing 110 may include the first supporting member 170, and the second housing 120 may include the second supporting member 180. The first supporting member 170 may be partially covered by the first side surface 113, and the second supporting member 180 may be partially covered by the second side surface 123. The first supporting member 170 may be integrally formed with the first side surface 113, and the second supporting member 180 may be integrally formed with the second side surface 123. According to an embodiment, the first supporting member 170 may be formed separately from the first side surface 113, and the second supporting member 180 may be formed separately from the second side surface 123. The first side surface 113 and the second side surface 123 may be formed of a metal material, a non-metal material, or a combination thereof. For example, the first side surface 113 may include a conductive portion 118 and a non-conductive portion 119. The conductive portion 118 may be used as a radiator of an antenna.

A surface of the first supporting member 170 may be coupled to the rear plate 190, and another surface of the first supporting member 170 may be coupled to the foldable display 130. A surface of the second supporting member 180 may be coupled to the display 135, and another surface of the second supporting member 180 may be coupled to the foldable display 130.

The printed circuit board 150 and a battery may be disposed in a space between a surface formed by the first supporting member 170 and the second supporting member 180 and a surface formed by the display 135 and the rear plate 190. The printed circuit board 150 may be separated so as to be disposed in the first supporting member 170 of the first housing 110 and in the second supporting member 180 of the second housing 120, respectively. Components for implementing various functions of the electronic device 100 may be disposed on the printed circuit board 150.

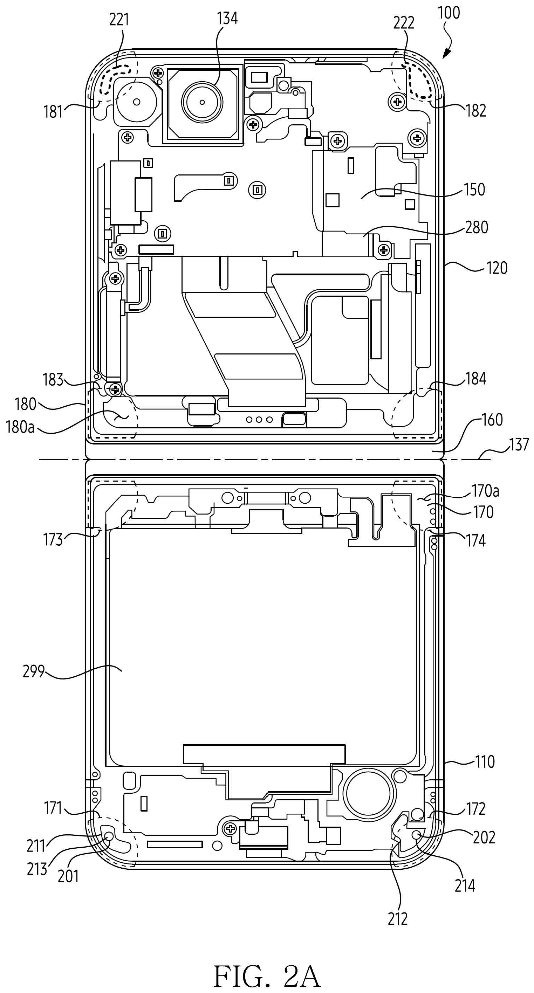

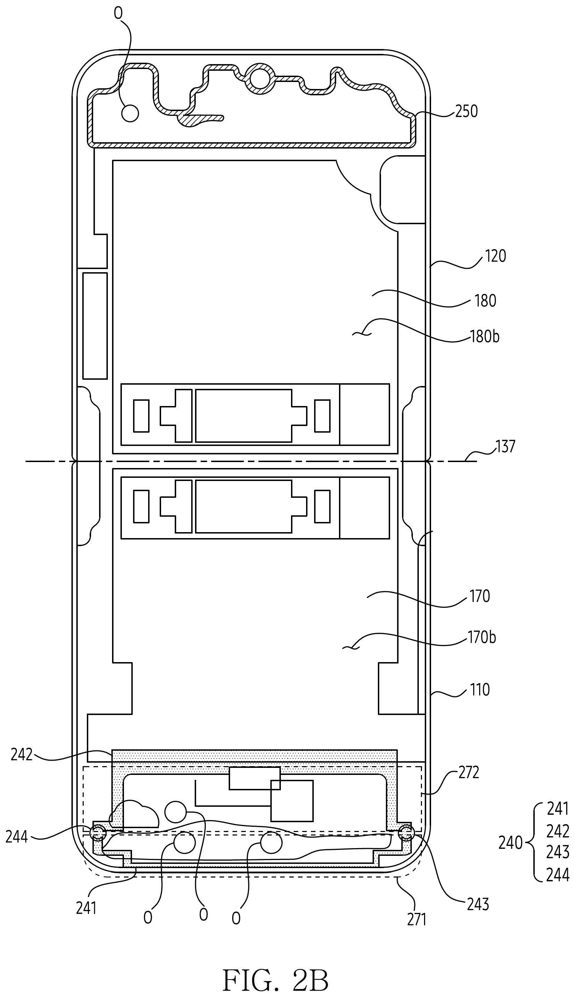

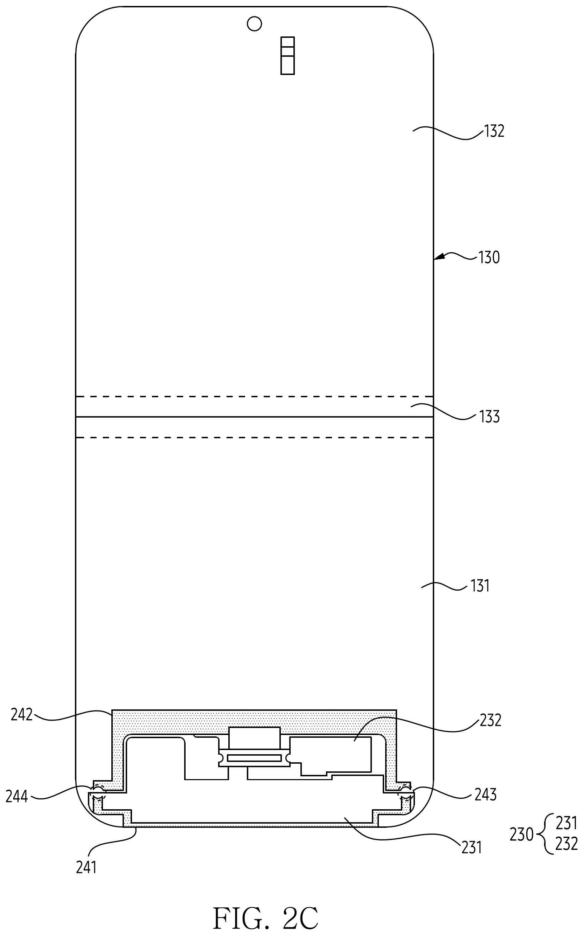

FIG. 2A is a diagram illustrating an exemplary disposition of components positioned on a rear surface of a supporting member of an exemplary foldable electronic device. FIG. 2B is a diagram illustrating a front surface of a supporting member of an exemplary foldable electronic device. FIG. 2C is a diagram illustrating a rear surface of a foldable display of an exemplary foldable electronic device.

Referring to FIG. 2A, a rear surface of an electronic device 100 in which an external display (e.g., the display 135 of FIG. 1C) and a rear plate 190 are separated is illustrated. For example, FIG. 2A illustrates a structure of the electronic device 100 in which the inside of the electronic device 100 in which the rear plate 190 is separated and exposed, when viewed from the rear surface of the electronic device 100. The electronic device 100 may be a foldable electronic device. The electronic device 100 may include a first housing 110, a second housing 120, and a hinge structure 160. The hinge structure 160 may pivotably connect a first supporting member 170 in the first housing 110 and a second supporting member 180 in the second housing 120. The electronic device 100 may be folded or unfolded with respect to a folding axis 137 through the hinge structure 160. The electronic device 100 may be configured to maintain a folded state by using magnets 211, 212, 221, and 222 disposed therein.

The first supporting member 170 may be fixed to the first housing 110. The first supporting member 170 may be integrally formed with the first housing 110. The second supporting member 180 may be fixed to the second housing 120. The second supporting member 180 may be integrally formed with the second housing 120. The first supporting member 170 and the second supporting member 180 may support components disposed inside the electronic device 100. In an unfolded state of the electronic device 100, the first housing 110 may be a lower housing of the electronic device 100. In the unfolded state of the electronic device 100, the second housing 120 may be an upper housing of the electronic device 100. The first housing 110 may provide a space in which a battery 299 and the magnets 211 and 212 are to be accommodated. The magnets 211 and 212, the battery 299, a speaker, a power interface, an antenna module, and/or components for an operation of the electronic device 100 may be disposed on a surface 170a (e.g., a rear surface of the first supporting member 170) of the first supporting member 170 in the first housing 110. A printed circuit board 150, a camera 134, and/or components for an operation of the electronic device 100 may be disposed on a surface 180a (e.g., a rear surface of the second supporting member 180) of the second supporting member 180 in the second housing 120. The components for an operation of the electronic device 100 may be mounted on the printed circuit board 150 or another printed circuit board disposed on the first supporting member 170. The components for an operation of the electronic device 100 may include a processor, memory, a transmission/reception module, and/or a communication module. The first supporting member 170 and the second supporting member 180 may be referred to as a frame, a chassis, a bracket, or a support plate in terms of fixing electronic components inside the electronic device 100 or providing a space in which the electronic components are mounted. The first supporting member 170 and the second supporting member 180 may be referred to as a front frame or a front in terms of supporting a foldable display 130 forming a front surface of the electronic device 100.

Referring to FIGS. 2B and 2C, the first supporting member 170 and the second supporting member 180 may support the foldable display 130. FIG. 2B illustrates a front surface of the electronic device 100 from which the foldable display 130 is separated. For example, FIG. 2B illustrates a structure of the electronic device 100, as viewed from the front surface of the electronic device 100, the inside of the electronic device 100 in which the foldable display 130 is separated and exposed. FIG. 2C illustrates a rear surface of the foldable display 130.

The first supporting member 170 may support a portion of the foldable display 130, and the second supporting member 180 may support another portion of the foldable display 130. Each of the first supporting member 170 and the second supporting member 180 may include a plate for supporting the foldable display 130. The portion of the foldable display 130 may be disposed on another surface 170b (e.g., a front surface of the first supporting member 170) of the first supporting member 170, and the another portion of the foldable display 130 may be disposed on another surface 180b (e.g., a front surface of the first supporting member 180) of the second supporting member 180. For example, a first display area 131 of the foldable display 130 may be disposed on the another surface 170b of the first supporting member 170. A second display area 132 of the foldable display 130 may be disposed on the another surface 180b of the second supporting member 180.

For waterproofing of the electronic device 100, the electronic device 100 may further include sealing members 240 and 250. The sealing members 240 and 250 may be disposed between the foldable display 130 and the supporting members 170 and 180. The sealing member 240 may be disposed between the foldable display 130 and the first supporting member 170. The sealing member 250 may be disposed between the foldable display 130 and the second supporting member 180. The sealing members 240 and 250 may be disposed to cover openings O formed in the supporting members 170 and 180. The openings O may be formed in the supporting members 170 and 180 to provide an opening for disposition of a front camera or a sensor, a cable for a connection with the foldable display 130, or a path of a flexible printed circuit board (FPCB). The sealing members 240 and 250 may restrict moisture transferred from the outside of the electronic device 100 to a space between the foldable display 130 and the supporting members 170 and 180, from flowing into the inside of the electronic device 100.

The first supporting member 170 may include a first portion 271 and a second portion 272. The first portion 271 may be a lower portion of the first supporting member 170 of the first housing 110 far from the folding axis 137. The second portion 272 may be at least a portion of a remaining portion of the first supporting member 170 except for the first portion 271. The second portion 272 may be a portion extending from the first portion 271 toward the folding axis 137. A stepped portion 273 may be formed at a boundary between the first portion 271 and the second portion 272. The first portion 271 may be a portion in which an extension portion 230 of the foldable display 130 is disposed. The extension portion 230 of the foldable display 130 may include a portion 231 (e.g., a chip on panel (COP) or a chip on film (COF)) in which a portion of a display panel extends or a film extends. The extension portion 230 of the foldable display 130 may include a portion in which a flexible printed circuit board 232 connected to a component (e.g., a display drive integrated (DDI) circuit) for controlling the display panel or a printed circuit board (e.g., the printed circuit board 150 of FIG. 1C) is disposed. The first portion 271 may be a portion in contact with the extension portion 230. The first portion 271 may be a portion recessed from the another surface 170b of the first supporting member 170. For example, in the first portion 271, the first supporting member 170 may be recessed from the another surface 170b toward the surface 170a of the first supporting member 170. The second portion 272 may be a portion in contact with a display panel of the first display area 131 of the foldable display 130. A shape of the first portion 271 and the second portion 272 may be determined according to a shape of the extension portion 230 of the display 130.

The first supporting member 170 may have a step between the first portion 271 and the second portion 272. The first portion 271 may be recessed from the second portion 272 to have a depth corresponding to a thickness of the extension portion 230.

The sealing member 240 may be disposed on the another surface 170b of the first supporting member 170. The sealing member 240 may be disposed in a lower end of the first supporting member 170. The sealing member 240 may be disposed in a periphery portion far from the folding axis 137 among peripheries of the first supporting member 170. The sealing member 240 may be disposed to cover a portion of the first supporting member 170 that needs waterproofing. The sealing member 240 may form a closed curve on the another surface 170b of the first supporting member 170. The sealing member 240 formed in a closed curve may isolate an internal space covered by the sealing member 240, the foldable display 130, and the first supporting member 170 from outside of the electronic device 100. The sealing member 240 may be referred to as a waterproof member in terms of preventing moisture from flowing into the electronic device 100. The sealing member 240 may be referred to as an adhesive member in terms of attaching the foldable display 230 to the supporting members 170 and 180.

The sealing member 240 may include a first sealing member 241, a second sealing member 242, a third sealing member 243, and a fourth sealing member 244. The first sealing member 241 and the second sealing member 242 may include one of a waterproof tape, a waterproof adhesive, a sealing tape, or adhesives.

The first sealing member 241 and the second sealing member 242 may be disposed on the another surface 170b of the first supporting member 170. The first sealing member 241 may be disposed on the first portion 271 of the first supporting member 170. The first sealing member 241 may extend from a first through hole 201 to a second through hole 202 in the first portion 271. The second sealing member 242 may be disposed on the second portion 272 of the first supporting member 170. The second sealing member 242 may extend from the first through hole 201 to the second through hole 202 in the second portion 272. A thickness of the first supporting member 170 in the first portion 271 in which the first sealing member 241 is disposed and in the second portion 272 in which the second sealing member 242 is disposed may be different from each other. The second sealing member 242 may be spaced apart from the first sealing member 241. The first sealing member 241 and the second sealing member 242 may be separated from each other and disposed on the first supporting member 170 by the step between the first portion 271 and the second portion 272 of the first supporting member 170. In a case that the first sealing member 241 and the second sealing member 242 are tapes, the first sealing member 241 and the second sealing member 242 may be spaced apart from a stepped portion. The stepped portion between the first portion 271 and the second portion 272 may be disposed between the first sealing member 241 and the second sealing member 242.

The first portion 271 may be a portion corresponding to the extension portion 230, and the second portion 272 may be a portion corresponding to a portion where the extension portion 230 is not disposed. The second portion 272 may be disposed along a periphery of the first portion 271 corresponding to the extension portion 230. The first sealing member 241 may be disposed in the extension portion 230, and the second sealing member 242 may be disposed to be spaced apart from the extension portion 230.

The third sealing member 243 and the fourth sealing member 244 may fill a separated portion (a gap) between the first sealing member 241 and the second sealing member 242. The third sealing member 243 and the fourth sealing member 244 may be disposed in the stepped portion between the first portion 271 and the second portion 272. The third sealing member 243 and the fourth sealing member 244 may connect the first sealing member 241 and the second sealing member 242. The third sealing member 243 and the fourth sealing member 244 may be referred to as an adhesive member in terms of being attached to the first sealing member 241, the second sealing member 242, the foldable display 130, and the first supporting member 170.

The third sealing member 243 and the fourth sealing member 244 may be supplied through through holes formed in the first supporting member 170.

Referring to FIGS. 2A, 2B, and 2C, the first supporting member 170 may include the through holes 201 and 202. The first through hole 201 and the second through hole 202 may provide a path for injecting an adhesive for connecting a waterproof tape that may not be disposed in the stepped portion 273 between the first portion 271 and the second portion 272. The first through hole 201 and the second through hole 202 may provide a path for injecting an adhesive for filling a gap between the first sealing member 241 disposed in the first portion 271 and the second sealing member 242 disposed in the second portion 272. For example, the through holes 201 and 202 may be an injection path of sealing members (e.g., the third sealing member 243 and the fourth sealing member 244 of FIG. 2B) for waterproofing. The third sealing member 243 and the fourth sealing member 244 may include at least one of an adhesive, a sealing adhesive, a waterproof adhesive, or a cured in places gasket (CIPG). At least a portion of the through holes 201 and 202 may accommodate the sealing member 243 or 244. For example, through an injection nozzle or an injection needle of a sealing member inserted into the through holes 201 and 202, the sealing member 243 or 244 may be injected into the through holes 201 and 202. The third sealing member 243 may be accommodated in the first through hole 201, and the fourth sealing member 244 may be accommodated in the second through hole 202. The first through hole 201 and the second through hole 202 may be disposed on a boundary between the first portion 271 and the second portion 272. For example, the first through hole 201 and the second through hole 202 may be disposed in the stepped portion 273 between the first portion 271 and the second portion 272. The third sealing member 243 injected through the first through hole 201 may connect an end of the first sealing member 241 and an end of the second sealing member 242. The fourth sealing member 244 injected through the second through hole 202 may connect another end of the first sealing member 241 and another end of the second sealing member 242.

The electronic device 100 may further include the plurality of magnets 211, 212, 221, and 222. The plurality of magnets 211, 212, 221, and 222 may be configured to maintain a folded state of the electronic device 100. The plurality of magnets 211, 212, 221, and 222 may be disposed on each edge portion 171, 172, 181, or 182 of the electronic device 100 in a state that the electronic device 100 is unfolded. For example, the plurality of magnets 211, 212, 221, and 222 may be disposed on an edge portion of the first supporting member 170a and the second supporting member 180a.

The first magnet 211 and the second magnet 212 may be disposed in the first supporting member 170. The first magnet 211 may be disposed in the edge portion 171 among edge portions 171, 172, 173, and 174 of the first supporting member 170, the edge portion 171 being among the edge portions 171 and 172 disposed at a periphery far from the folding axis 137. The second magnet 212 may be disposed in the edge portion 172 among the edge portions 171, 172, 173, and 174 of the first supporting member 170a, the edge portion 172 being among the edge portions 171 and 172 disposed at a periphery far from the folding axis 137.

The third magnet 221 and the fourth magnet 222 may be disposed in the second supporting member 180. The third magnet 221 may be disposed in the edge portion 181 among edge portions 181, 182, 183, and 184 of the second supporting member 180, the edge portion 181 being among the edge portions 181 and 182 disposed at a periphery far from the folding axis 137. The fourth magnet 222 may be disposed in the edge portion 182 among the edge portions 181, 182, 183, and 184 of the second supporting member 180b, the edge portion 182 being among the edge portions 181 and 182 disposed at a periphery far from the folding axis 137.

The electronic device 100 may include the camera 134, the printed circuit board 150, the battery 299, and/or electronic components (e.g., a processor, memory, communication circuitry, or an antenna module) necessary for an operation of the electronic device 100. The camera 134, the printed circuit board 150, the battery 299, and/or the electronic components necessary for an operation of the electronic device 100 may be disposed in the housings 110 and 120 of the electronic device 100. Since the battery 299 and the electronic components disposed in the first housing 110 fill the center of the first supporting member 170, a space for the first magnet 211 and the second magnet 212 may be positioned within the edge portions 171, 172, 173, and 174. In order to reduce an interaction with a touch panel or a digitizer of the foldable display 130, the first magnet 211 and the second magnet 212 may be positioned within the edge portions 171, 172, 173, and 174 of the first supporting member 170. The first magnet 211 and the second magnet 212 may be disposed at an optimal position for maintaining a folded state of the electronic device 100 in a state that the electronic device 100 is folded. In the state that the electronic device 100 is folded, a repulsive force may act strongly at a periphery of the foldable display 130 far away from the folding axis 137. In order to maintain the folded state, magnets may be configured to provide an attractive force greater than the repulsive force. The first magnet 211 and the second magnet 212 may be disposed to provide, in the state that the electronic device 100 is folded, a rotational moment that is greater than a rotational moment caused by a repulsive force that is in an opposite direction of the rotational moment. For example, in order to provide a large rotational moment with respect to a folding axis, the first magnet 211 and the second magnet 212 may be disposed on the edge portions 171 and 172 far from the folding axis 137. The first magnet 211 may be disposed on the surface 170a of the first supporting member 170 within the edge portion 171. The second magnet 212 may be disposed on the surface 170a of the first supporting member 170 within the edge portion 172.

Since the camera 134, the printed circuit board 150, and the electronic components disposed in the second housing 120 fill the center of the second supporting member 180, a space for the third magnet 221 and the fourth magnet 222 may be positioned within the edge portions 181, 182, 183, and 184 of the second supporting member 180. In order to reduce an interaction with a touch panel or a digitizer of the foldable display 130, the third magnet 221 and the fourth magnet 222 may be positioned within the edge portions 181, 182, 183, and 184. The third magnet 221 and the fourth magnet 222 may be disposed at an optimal position for maintaining a folded state of the electronic device 100 in the state that the electronic device 100 is folded. The third magnet 221 and the fourth magnet 222 may be disposed at a position associated with the first magnet 211 and the second magnet 212 in the state that the electronic device 100 is folded. The third magnet 221 and the fourth magnet 222 may be aligned with the first magnet 211 and the second magnet 212 in the state that the electronic device 100 is folded. For example, in the state that the electronic device 100 is folded, the first magnet 211 may face the third magnet 221, and the second magnet 212 may face the fourth magnet 222. For example, the third magnet 221 and the fourth magnet 222 may be disposed in the edge portions 181 and 182 far from the folding axis 137. The third magnet 221 may be disposed in the edge portion 181, and the fourth magnet 222 may be disposed in the edge portion 182. The third magnet 221 and the fourth magnet 222 may be disposed on the surface 180a of the second supporting member 180. However, it is not limited thereto, and the third magnet 221 and the fourth magnet 222 may be disposed on the another surface 180b of the second supporting member 180.

The first magnet 211 disposed in the edge portion 171 of the first supporting member 170 and the second magnet 212 disposed in the edge portion 172 of the first supporting member 170 may overlap the through holes 201 and 202 of the first supporting member 170. When viewing the first supporting member 170 vertically, the first magnet 211 may overlap the first through hole 201, and the second magnet 212 may overlap the second through hole 202. The first magnet 211 may include a third through hole 213 connected to the first through hole 201. The third through hole 213 may provide a path through which the third sealing member 243 is injected. For example, the third sealing member 243 may be transmitted to the first through hole 201 through a nozzle or a needle inserted into the third through hole 213 to connect the first sealing member 241 and the second sealing member 242. The second magnet 212 may include a fourth through hole 214 connected to the second through hole 202. The fourth through hole 214 may provide a path through which the fourth sealing member 244 is injected. For example, the fourth sealing member 244 may be transmitted to the second through hole 202 through a nozzle or a needle inserted into the fourth through hole 214 to connect the first sealing member 241 and the second sealing member 242.

An interior of the third through hole 213 of the first magnet 211 may be connected to an interior of the first through hole 201 of the first supporting member 170. For example, at least a portion of the third through hole 213 of the first magnet 211 may overlap the first through hole 201 of the first supporting member 170 when viewing the first supporting member 170 vertically. The third sealing member 243 may be viewed from the another surface 170b of the first supporting member 170 through the first through hole 201 and the third through hole 213. An interior of the fourth through hole 214 of the second magnet 212 may be connected to an interior of the second through hole 202 of the first supporting member 170. For example, at least a portion of the fourth through hole 214 of the second magnet 212 may overlap the second through hole 202 of the first supporting member 170 when viewing the first supporting member 170 vertically. The fourth sealing member 244 may be viewed from the another surface 170b of the first supporting member 170 through the second through hole 202 and the fourth through hole 214.

The magnets 211 and 212 respectively overlapped with the through holes 201 and 202 may provide a magnetic force greater than magnets disposed by avoiding the through holes 201 and 202. For example, the first magnet 211 may provide a magnetic force greater than a magnet that is not disposed not to overlap the first through hole 201 by being disposed to overlap the first through hole 201, and the second magnet 212 may provide a magnetic force greater than a magnet that is not disposed not to overlap the second through hole 202 by being disposed to overlap the second through hole 202. As the first magnet 211 and the second magnet 212 increase a volume of the magnet by being disposed to overlap the corresponding through holes 201 and 202, respectively, it may increase an attractive force between the corresponding third magnet 221 and the fourth magnet 222 in the state that the electronic device 100 is folded. The electronic device 100 may maintain the folded state through the attractive force between the magnets having the increased volume.

The first magnet 211 including the third through hole 213 and the second magnet 212 including the fourth through hole 214 may provide a large magnetic force and may also provide an injection path for the third sealing member 243 and the fourth sealing member 244.

The electronic device 100 according to the above-described embodiment may stably maintain the folded state of the electronic device 100 by including the magnets 211, 212, 221, and 222 disposed in the edge portion of the electronic device 100. As some magnets 211 and 212 of the magnets 211, 212, 221, and 222 are disposed to overlap the through holes 201 and 202 formed in the first supporting member 170 for injection of the sealing member within the edge portion, it may provide a greater magnetic force for maintaining the folded state of the electronic device 100. As some magnets 211 and 212 include the through holes 213 and 2140 connected to the through holes 201 and 202, it may provide a greater magnetic force, and at the same time, may provide an injection path of the sealing member.

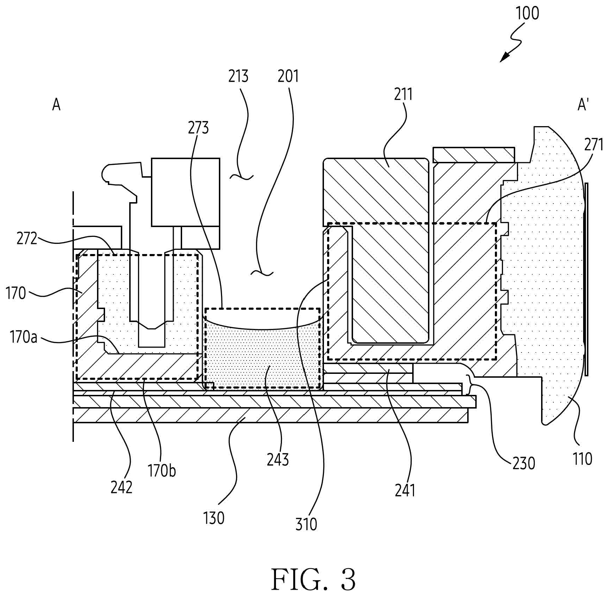

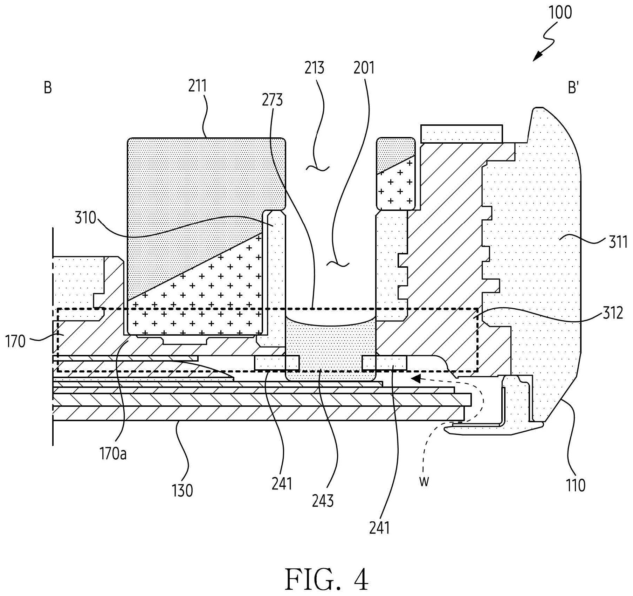

FIG. 3 is a cross-sectional view of an exemplary foldable electronic device cut along line A-A'. FIG. 4 is a cross-sectional view of an exemplary foldable electronic device cut along line B-B'.

Referring to FIGS. 3 and 4, a first supporting member 170 may include a side wall 310 extending in a z-axis direction. The side wall 310 may extend from a first surface 170a of the first supporting member 170. The side wall 310 may be formed along a boundary of a cross section of a first through hole 201. The side wall 310 may cover the first through hole 201. The side wall 310 covering the first through hole 201 may be a hollow pipe shape. The first supporting member 170 may include a conductive portion 311 and a non-conductive portion 312. The first supporting member 170 may be formed through a double injection. The first supporting member 170 may include the side wall 310 formed of the conductive portion 311. The side wall 310 may be formed of the conductive portion 311 including a metal material for securing rigidity and stably fixing a first magnet 211.

A first sealing member 241 and a second sealing member 242 may be disposed between the first supporting member 170 and a foldable display 130. The first supporting member 170 may include a first portion 271, a second portion 272, and a stepped portion 273. The first portion 271 may be a portion close to a lower end of a first housing 110. The second portion 272 may be a portion extending from the first portion 271 to a folding axis (e.g., the folding axis 137 of FIG. 1C). The first portion 271 may be a portion of the first supporting member 170 in contact with an extension portion 230. The second portion 272 may be a portion of the first supporting member 170 in contact with a display panel of the foldable display 130.

Another surface 170b of the first supporting member 170 may include the stepped portion 273 between the first portion 271 and the second portion 272. The second portion 272 may be recessed by a thickness of the extension portion 230 relative to the first portion 271. The second portion 272 may be recessed in a direction from the another surface 170b of the first supporting member 170 toward the surface 170a of the first supporting member 170. In the second portion 272, a recessed depth may correspond to the thickness of the extension portion 230. The stepped portion 273 may be disposed between the first portion 271 and the second portion 272. The first sealing member 241 and the second sealing member 242 formed of a tape may be attached to a flat surface for sealing. The first sealing member 241 and the second sealing member 242 may be spaced apart from each other within the stepped portion 273. A third sealing member 243 inserted or injected through the first through hole 201 may connect the first sealing member 241 and the second sealing member 242. The first sealing member 241, the second sealing member 242, and the third sealing member 243 may restrict moisture w reaching a space between the foldable display 230 and the first housing 110 (or the first supporting member 170 from flowing into the inside of the electronic device 100.

The first magnet 211 may be disposed on the surface 170a of the first supporting member 170. The first magnet 211 may be seated in a groove formed by a structure and the side wall 310 protruding from the surface 170a of the first supporting member 170. The first magnet 211 may be seated in the groove and fixed inside the electronic device 100. A portion of the first magnet 211 may be disposed inside the groove, and a remaining portion of the first magnet 211 may be disposed on the side wall 310. The first magnet 211 may be attached on the side wall 310. For example, the first magnet 211 may be attached to the side wall 310 through an adhesive member. The adhesive member may include an adhesive, a tape, or a double-sided tape. The adhesive may fill between the first magnet 211 and the side wall 310. The remaining portion of the first magnet 211 may include a third through hole 213 connected to the first through hole 201. As internal spaces of the first through hole 201 and the third through hole 213 are connected to each other, the first through hole 201 and the third through hole 213 may provide an injection path of the third sealing member 243.

The first magnet 211 further including the remaining portion disposed on the side wall 310 may provide a magnetic force greater than a magnet not including the remaining portion. The remaining portion of the first magnet 211 disposed on the side wall 310 may include the third through hole 213 so as not to cover the first through hole 201. While the first magnet 211 is formed to overlap the first through hole 201, by connecting the first through hole 201 and the third through hole 213, it may provide a greater magnetic force and also provide an injection path of the third sealing member 243.

Referring to FIG. 4, in a case that the first sealing member 241 is disposed in the stepped portion 273 positioned between the first portion 271 and the second portion 272, a gap may be formed between the first sealing member 241 and the foldable display 130. The third sealing member 243 may be injected through the first through hole 201 and may be in contact with a rear surface of the foldable display 130. The third sealing member 243 in contact with the foldable display 130 may fill the gap between the third sealing member 243 and the foldable display 130. The third sealing member 243 filling the gap may prevent moisture w reaching through between the foldable display 130 and the first housing 110 from flowing into the inside of the electronic device 100.

Referring to FIGS. 3 and 4, the first through hole 201, the first magnet 211, and the third through hole 213 positioned in an edge portion 171 have been described, but the above-described content may also be applied equally or similarly to a second through hole 202, a second magnet 212, and a fourth through hole 214 positioned in an edge portion 172.

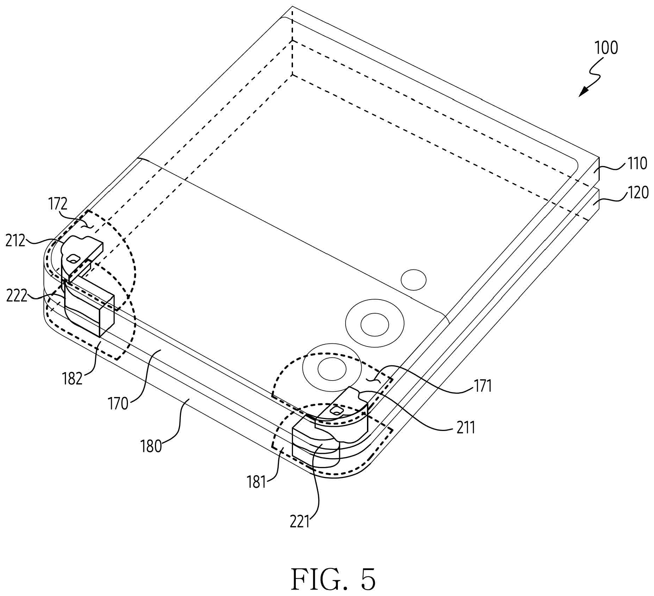

FIG. 5 is a diagram illustrating disposition of a magnet in a folded state of an exemplary foldable electronic device.

Referring to FIG. 5, in a folded state of an electronic device 100, magnets 211, 212, 221, and 222 in the electronic device 100 may be aligned to interact with each other. In the folded state of the electronic device 100, the magnets 211 and 212 disposed in a first housing 110 may interact with the magnets 221 and 222 disposed in a second housing 120, respectively. For example, in the folded state of the electronic device 100, the first magnet 211 may interact with the third magnet 221 corresponding to the first magnet 211, and the second magnet 212 may interact with the fourth magnet 222 corresponding to the second magnet 212.

The magnets 211, 212, 221, and 222 may be disposed on an edge portion (e.g., edge portions 171 and 172 among edge portions of a first supporting member 170, and edge portions 181 and 182 among edge portions of a second supporting member 180) of a foldable display 130, the edge portion having a greater repulsive force in the foldable display 130.

In order to maintain the folded state of the electronic device 100 despite the repulsive force of the foldable display 130, the magnets 211, 212, 221, and 222 may be disposed to increase an attractive force between the magnets 211, 212, 221, and 222. In the folded state of the electronic device 100, the first magnet 211 disposed in the edge portion 171 may be arranged with respect to the third magnet 221 disposed in the edge portion 181. The first magnet 211 may face the third magnet 221 in the folded state of the electronic device 100. When viewing the electronic device 100 in a direction in which a first through hole 201 extends in the folded state of the electronic device 100, the first magnet 211 may overlap the third magnet 221. In the folded state of the electronic device 100, the second magnet 212 disposed in the edge portion 172 may be arranged with respect to the fourth magnet 222 disposed in the edge portion 182. At least a portion of the second magnet 212 may face the fourth magnet 222 in the folded state of the electronic device 100. When viewing the electronic device 100 in a direction in which a second through hole 202 extends in the folded state of the electronic device 100, the at least a portion of the second magnet 212 may overlap the fourth magnet 222.

According to the above-described embodiment, as the first magnet 211 and the third magnet 221 are disposed to face each other and the second magnet 212 and the fourth magnet 222 are disposed to face each other in a state that the electronic device 100 is folded, an attractive force between the first magnet 211 and the third magnet 221 and an attractive force between the second magnet 212 and the fourth magnet 222 may be improved. Due to the improved attractive force between the magnets in the folded state of the electronic device 100, the electronic device 100 may stably maintain the folded state.

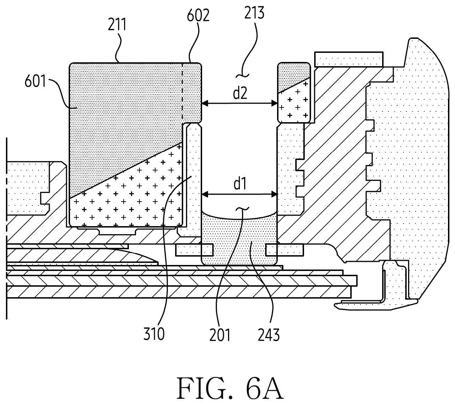

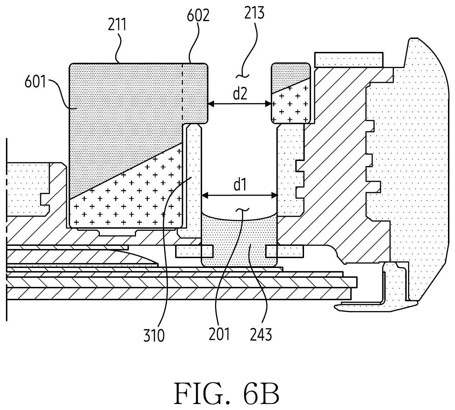

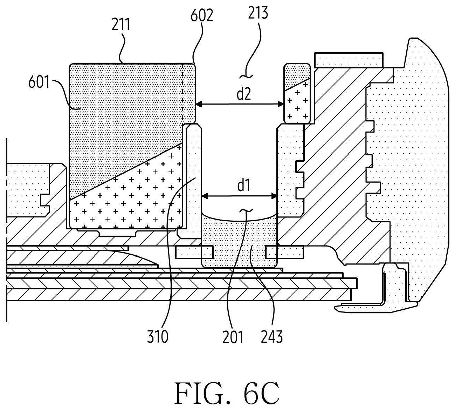

FIGS. 6A, 6B, and 6C are diagrams exemplarily illustrating a relationship between a through hole of a magnet and a through hole of a supporting member.

Referring to FIGS. 6A, 6B, and 6C, a first through hole 201 formed in a first supporting member 170 may be connected to a second through hole 202 formed in a first magnet 211. The first magnet 211 may include a body 601 and a wing 602. At least a portion of the body 601 of the first magnet 211 may be seated in a space formed by a side wall 310 and the first supporting member 170. A height of the first magnet 211 may be higher than that of the side wall 310. A height of the body 601 of the first magnet 211 may be higher than that of the side wall 310. The wing 602 of the first magnet 211 may cover the first through hole 201 from the body 601. The wing 602 may be disposed on the side wall 310. The wing 602 may be supported by the side wall 310. The wing 602 of the first magnet 211 may include a third through hole 213 connected to the first through hole 201. The first magnet 211 may be attached to the first supporting member 170 through an adhesive member. The adhesive member may include one of an adhesive, a tape, or a double-sided tape. The adhesive may prevent a third sealing member 243 from leaking through a boundary between the first through hole 201 and the third through hole 213 by filling a space between the wing 602 of the first magnet 211 and the side surface 310.

Referring to FIG. 6A, the first through hole 201 may be arranged with respect to the third through hole 213. A diameter d1 of the first through hole 201 may be the same as a diameter d2 of the third through hole 213. The first through hole 201 may be aligned with the third through hole 213. For example, when viewing the first supporting member 170 in a direction in which the first through hole 201 and the third through hole 213 extend, the first through hole 201 and the third through hole 213 may fully overlap. An inner surface of the first through hole 201 may be connected to an inner surface of the third through hole 213. The first through hole 201 and the third through hole 213 having the same diameter may provide an inner surface continuously connected. However, it is not limited thereto, and the first through hole 201 may be not aligned with the third through hole 213, and when viewing the first supporting member 170 in the direction in which the first through hole 201 and the third through hole 213 extend, only a portion of the first through hole 201 may overlap the third through hole 213.

Referring to FIG. 6B, the first through hole 201 may be arranged with respect to the third through hole 213. The diameter d1 of the first through hole 201 may be greater than the diameter d2 of the third through hole 213. The first through hole 201 may be aligned with the third through hole 213. For example, a center of a cross section of the first through hole 201 may coincide with a center of a cross section of the third through hole 213. When viewing the first supporting member 170 in the direction in which the first through hole 201 and the third through hole 213 extend, the first through hole 201 may be disposed in the third through hole 213. The wing 602 of the first magnet 211 may cover a portion of the first through hole 201. However, it is not limited thereto, and the first through hole 201 may not be aligned with the third through hole 213.

Referring to FIG. 6C, the first through hole 201 may be arranged with respect to the third through hole 213. The diameter d1 of the first through hole 201 may be smaller than the diameter d2 of the third through hole 213. The first through hole 201 may be aligned with the third through hole 213. For example, a center of a cross section of the first through hole 201 may coincide with a center of a cross section of the third through hole 213. When viewing the first supporting member 170 in the direction in which the first through hole 201 and the third through hole 213 extend, the third through hole 213 may be disposed in the first through hole 201. The wing 602 of the first magnet 211 may cover a portion of an end portion of the side wall 310. For example, when viewing the first supporting member 170 in the direction in which the first through hole 201 and the third through hole 213 extend, the side wall 310 may be visually exposed through the first through hole 201. However, it is not limited thereto, and the first through hole 201 may not be aligned with the third through hole 213.

The diameters of the first through hole 201 and the third through hole 213 may be greater than a diameter of a needle or a nozzle for injecting the third sealing member 243 inserted or injected into the first through hole 201.

Referring to FIGS. 6A, 6B, and 6C, the first through hole 201, the first magnet 211, and the third through hole 213 positioned in an edge portion 171 have been described, but the above-described content may also be applied equally or similarly to the second through hole 202, a second magnet 212, and the fourth through hole 214 positioned in an edge portion 172.

Diameters of the first through hole 201, the second through hole 202, the third through hole 213, and the fourth through hole 214 may be the same. However, it is not limited thereto, and the diameter of the third through hole 213 of the first magnet 211 and the diameter of the fourth through hole 214 of the second magnet 212 may be different from each other. For example, the diameter d2 of the third through hole 213 of the first magnet 211 may be the same as the diameter d1 of the first through hole 201, and the diameter of the fourth through hole 214 of the second magnet 212 may be greater or smaller than the diameter of the first through hole 201. For example, the diameter d2 of the third through hole 213 of the first magnet 211 may be smaller than the diameter d1 of the first through hole 201, and the diameter of the fourth through hole 214 of the second magnet 212 may be greater than the diameter of the first through hole 201 or the same as the diameter of the first through hole 201. For example, the diameter d2 of the third through hole 213 of the first magnet 211 may be greater with the diameter d1 of the first through hole 201, and the diameter of the fourth through hole 214 of the second magnet 212 may be smaller than the diameter of the first through hole 201 or the same as the diameter of the first through hole 201. The diameters of the first through hole 201, the second through hole 202, the third through hole 213, and the fourth through hole 214 may be determined according to a shape of a peripheral mechanism or supporting members 170 and 180 in which magnets 211, 212, 221, and 222 are disposed.

According to the above-described embodiment, since the third through hole 213 of the first magnet 211 is connected to the first through hole 201, the third sealing member 243 may be provided between a foldable display 130 and the first supporting member 170 through the first through hole 201 and the third through hole 213. An electronic device 100 may maintain a folded state of the electronic device 100 by including the first magnet 211 having the third through hole 213, and may restrict moisture flowing into the electronic device 100 by providing a sealing member through the third through hole 213.

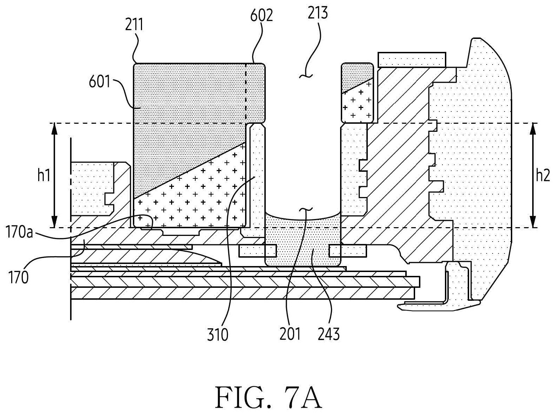

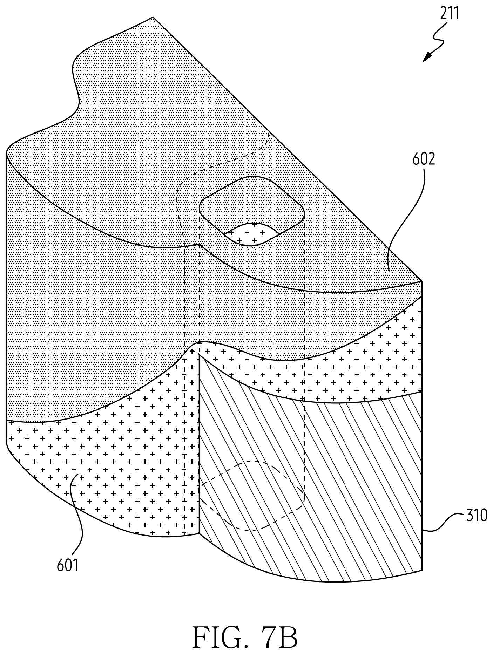

FIGS. 7A and 7B are diagrams exemplarily illustrating a configuration of a magnet and a side wall.

Referring to FIGS. 7A and 7B, a first magnet 211 may include a body 601 and a wing 602. At least a portion of the body 601 of the first magnet 211 may be seated in a space formed by a side wall 310 and a first supporting member 170. The first magnet 211 may be attached to the first supporting member 170 through an adhesive member. The adhesive member may include one of an adhesive, a tape, or a double-sided tape. The adhesive may prevent a third sealing member 243 from leaking through a boundary between a first through hole 201 and a third through hole 213 by filling a space between the wing 602 of the first magnet 211 and the side surface 310.

A height of the first magnet 211 may be higher than that of the side wall 310. A height of the body 601 of the first magnet 211 may be higher than that of the side wall 310. The wing 602 of the first magnet 211 may cover the first through hole 201 from the body 601. The wing 602 may be disposed on the side wall 310. The wing 602 may be supported by the side wall 310. The wing 602 of the first magnet 211 may include the third through hole 213. The first through hole 201 formed in the first supporting member 170 may be connected to the third through hole 213 formed in the first magnet 211.

The side wall 310 formed along the first through hole 201 may protrude to a predetermined length from a surface 170a of the first supporting member 170. For example, a length h1 of the side wall 310 in contact with the body 601 of the first magnet 211 and the wing 602 of the first magnet 211 may be the same as a length h2 of the side wall 310 supporting the wing 602 of the first magnet 211. The length h1 of the side wall 310 in contact with the body 601 of the first magnet 211 and the wing 602 of the first magnet 211 may be the same as a length h2 of the side wall 310 in contact with only the wing 602 of the first magnet 211. The length h1 of the side wall 310 in contact with the body 601 of the first magnet 211 may be the same as the length h2 of the side wall 310 not in contact with the body 601 of the first magnet 211.

The side wall 310 may extend toward the wing 602 of the first magnet 211 with the same length. A wing of the first magnet 211 positioned on the side wall 310 may be formed to have the same thickness.

Referring to FIGS. 7A and 7B, a relationship between the first magnet 211 and the side wall 310 positioned in an edge portion 171 has been described, but the above-described content may also be applied equally or similarly to a side wall in contact with a second through hole 202 and the second through hole 202 positioned in an edge portion 172.

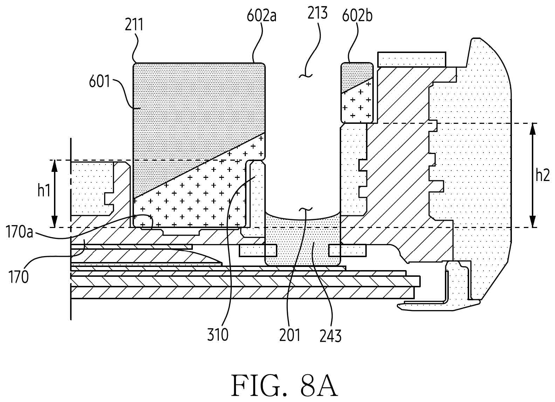

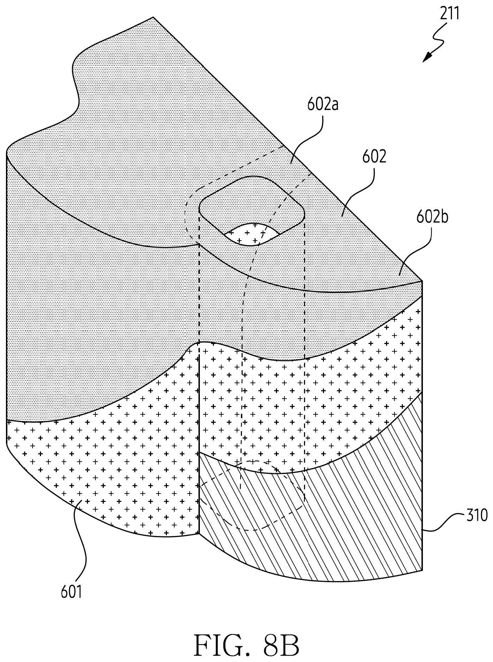

FIGS. 8A and 8B are diagrams exemplarily illustrating a configuration of an exemplary side wall having a height different from each other.

A first magnet 211 may be attached to a first supporting member 170 through an adhesive member. The adhesive member may include one of an adhesive, a tape, or a double-sided tape. The adhesive may prevent a third sealing member 243 from leaking through a boundary between a first through hole 201 and a third through hole 203 by filling a space between a wing 602 of the first magnet 211 and a side surface 310. The side wall 310 formed along the first through hole 201 may protrude from a surface 170a of the first supporting member 170. The protruding lengths of the side wall 310 of the first supporting member 170 may be different from each other. For example, a length h1 of the side wall 310 in contact with a body 601 of the first magnet 211 and the wing 602 of the first magnet 211 may be smaller than a length h2 of the side wall 310 supporting the wing 602 of the first magnet 211. The length h1 of the side wall 310 in contact with the body 601 of the first magnet 211 and the wing 602 of the first magnet 211 may be smaller than the length h2 of the side wall 310 in contact with only the wing 602 of the first magnet 211. The length h1 of the side wall 310 in contact with the body 601 of the first magnet 211 may be smaller than the length h2 of the side wall 310 not in contact with the body 601 of the first magnet 211.

The side wall 310 may extend toward the wing 602 of the first magnet 211 with different lengths. The wing 602 of the first magnet 211 positioned on the side wall 310 may also be formed to have different thicknesses. The wing 602 disposed on the side wall 310 may have a surface (e.g., an upper surface of the first magnet 211 or an upper surface of the wing 602) parallel to the first supporting member 170. When the protruding length of the side wall 310 is short, the wing 602 of the first magnet 211 may be thick such that the wing 602 or the first magnet 211 has a surface parallel to the first supporting member 170. When the protruding length of the side wall 310 is long, the wing 602 of the first magnet 211 may be thin such that the wing 602 or the first magnet 211 has a surface parallel to the first supporting member 170.

The wing 602 of the first magnet 211 may include a portion 602a in contact with the body 601 and a remaining portion 602b. The length h1 of the side wall 310 in contact with the body 601 of the first magnet 211 and the wing 602 of the first magnet 211 may be relatively short. The portion 602a disposed on the side wall 310 in contact with the body 601 of the first magnet 211 and the wing 602 of the first magnet 211 may be thicker than another portion of the wing 602. The length h2 of the side wall 310 in contact with only the wing 602 of the first magnet 211 may be relatively long. The remaining portion 602b disposed on the side wall 310 in contact with only the wing 602 of the first magnet 211 may be thinner than another portion of the wing 602.

Although it is described that the length h1 is shorter than the length h2, the length h1 may also be longer than the length h2. For example, the length h1 of the side wall 310 in contact with the body 601 of the first magnet 211 may be longer than the length h2 of the side wall 310 not in contact with the body 601 of the first magnet 211. The portion 602a disposed on the side wall 310 in contact with the body 601 of the first magnet 211 and the wing 602 of the first magnet 211 may be thinner than another portion of the wing 602.

Referring to FIGS. 8A and 8B, a relationship between the first magnet 211 and the side wall 310 positioned in an edge portion 171 has been described, but the above-described content may also be applied equally or similarly to a side wall in contact with a second through hole 202 and the second through hole 202 positioned in an edge portion 172.

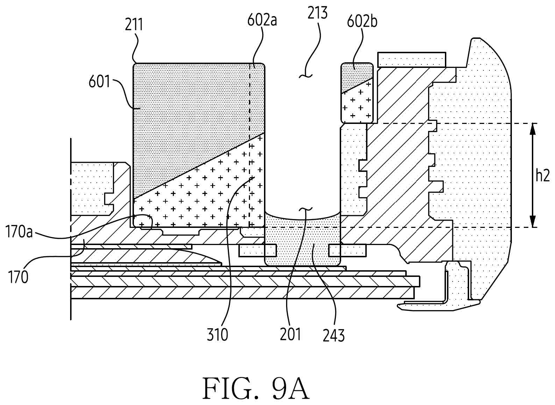

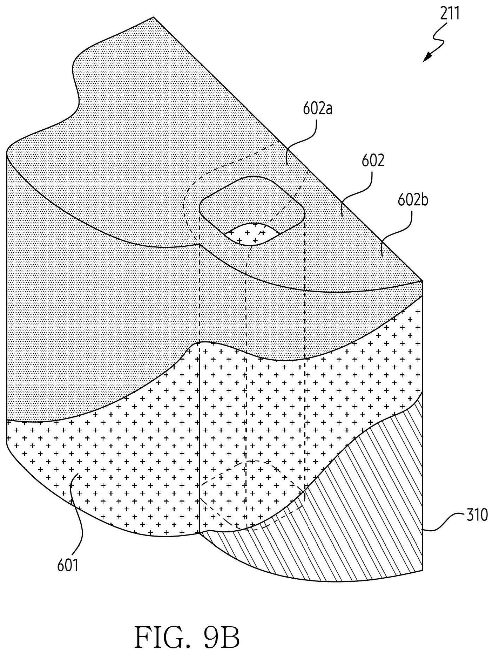

FIGS. 9A and 9B are diagrams exemplarily illustrating a configuration in which a portion of an exemplary side wall is removed.

A first magnet 211 may be attached to a first supporting member 170 through an adhesive member. The adhesive member may include one of an adhesive, a tape, or a double-sided tape. The adhesive may prevent a third sealing member 243 from leaking through a boundary between a first through hole 201 and a third through hole 203 by filling a space between a wing 602 of the first magnet 211 and a side surface 310. The side wall 310 formed along a portion of the first through hole 201 may protrude from a surface 170a of the first supporting member 170. The protruding lengths of the side wall 310 of the first supporting member 170 may be different from each other. For example, a body 601 may be disposed instead of a side wall along a remaining portion of a periphery of the first through hole 201. The side wall 310 may become thicker as it moves away from the body 601. The first through hole 201 may be formed by the first magnet 211 and the side wall 310.

Referring to FIGS. 9A and 9B, a relationship between the first magnet 211 and the side wall 310 positioned in an edge portion 171 has been described, but the above-described content may also be applied equally or similarly to a side wall in contact with a second through hole 202 and the second through hole 202 positioned in an edge portion 172.

Although it is described that the wing 602 of the first magnet 211 of FIGS. 7A, 7B, 8A, 8B, 9A, and 9B is formed along the first through hole 201, the wing 602 may be formed along only a portion of the first through hole 201. The wing 602 may include an open portion connected to a third through hole 213. For example, a portion (e.g., a portion of the remaining portion 602b of FIG. 8B) of the wing 602 facing the body 601 may be removed.

In the descriptions of FIGS. 7A, 7B, 8A, 8B, 9A, and 9B, it is described that the first magnet 211 and the second magnet 212 may be formed in the same or similar shape, but it is not limited thereto. For example, the first magnet 211 may be configured to have the same length of the wing 602 as illustrated in FIGS. 7A or 7B, and the second magnet 212 may be configured to have different extension lengths of the wing 602 as illustrated in FIGS. 8A or 8B, or a portion of the second magnet 212 may be configured to replace a function of the side wall 310 as illustrated in FIGS. 9A or 9B. The first magnet 211 may be configured to have different extension lengths of the wing 602 as illustrated in FIGS. 8A or 8B, and the second magnet 212 may be configured to have the same length of the wing 602 as illustrated in FIGS. 7A or 7B, or a portion of the second magnet 212 may be configured to replace a function of the side wall 310 as illustrated in FIGS. 9A or 9B.

According to the above-described embodiment, the first magnet 211 or the second magnet 212 may have various shapes according to an environment (e.g., a shape or a mechanism of the first supporting member 170) around the magnets 211 and 212. As the first magnet 211 or the second magnet 212 is formed to correspond to the surrounding environment, and is configured to cover a portion of the side wall 310 or replace a portion of the side wall 310, it may secure a magnetic field. As the first magnet 211 or the second magnet 212 includes the third through hole 213 or the fourth through hole 214 connected to the through holes 201 and 202, a third sealing member or a fourth sealing member for waterproofing may be injected.

A foldable electronic device may include a structure for maintaining a folded state. In order to maintain the folded state of the foldable electronic device, magnets may be disposed on each of edge portions of a foldable display. In order to avoid interference between a structure for waterproofing and the magnets in the foldable electronic device, since a volume of the magnet may be reduced, a structure for securing a magnetic force to maintain the folded state of the foldable electronic device may be required.

According to the above-described embodiment, a foldable electronic device (e.g., the electronic device 100 of FIG. 1A) may include a first housing (e.g., the first housing 110 of FIG. 1A), a second housing (e.g., the second housing 120 of FIG. 1A), and a foldable display (e.g., the foldable display 130 of FIG. 1A). The foldable display may form at least a portion of a front surface of the first housing 110 and a front surface of the second housing 120 and be configured to be bent in a folded state of the foldable electronic device 100.

The foldable electronic device 100 may further include a supporting member (e.g., the first supporting member 170 of FIG. 1C). The supporting member may have a first through hole (e.g., the first through hole 201 of FIG. 2A). The supporting member may be disposed in the first housing 110 to support the foldable display 130.

The foldable electronic device 100 may further include a magnet (e.g., the first magnet 211 of FIG. 2A). The magnet may include a second through hole 213. The magnet may be disposed on a corner portion of the supporting member 170 to maintain the folded state of the foldable electronic device 100.

The foldable electronic device 100 may further include a sealing member (e.g., the sealing member 240 of FIG. 2B). The sealing member 240 may be disposed between the foldable display 130 and the supporting member 170.

The foldable electronic device 100 may further include an adhesive member 243. The adhesive member 243 may isolate an internal space defined by the sealing member 240, the foldable display 130, and the supporting member 170 from outside of the electronic device. The adhesive member 243 may be in contact with the sealing member 240 and the foldable display 130.

The adhesive member 243 may be visible from a rear surface of the supporting member 170 through the first through hole 201 and the second through hole 213.

The foldable electronic device 100 according to the above-described embodiment may provide a magnetic force for maintaining the folded state of the foldable electronic device 100 through the magnet. The foldable electronic device 100 may inject an adhesive member through the second through hole 213 and the first through hole 201 connected to the second through hole 213 of the magnet 211 for waterproofing of the foldable electronic device 100.

According to an embodiment, the adhesive member 243 may be accommodated in at least a portion of the first through hole 201. The adhesive member 243 and the sealing member 240 may form a closed curve extending along a boundary of the internal space, when viewing the supporting member 170 vertically.

The adhesive member 243 according to the above-described embodiment may block moisture from flowing into the foldable electronic device 100 by forming the closed curve.

According to an embodiment, the supporting member 170 may be disposed between the magnet 211 and the foldable display 130. The corner portion may be a corner portion among corner portions of the supporting member 170 far from a folding axis 137 of the foldable display 130.

According to the above-described embodiment, the magnet 211 may maintain the folded state of the foldable electronic device 100 by being disposed in a portion having a strong repulsive force of the foldable display 130.

According to an embodiment, the adhesive member 243 and the sealing member 240 may restrict moisture reaching between the display and the supporting member 170 from flowing into the internal space.

According to an embodiment, the supporting member 170 may include a first portion 271 and a second portion 272 having a height different from the first portion 271. The first through hole 201 may be disposed on a boundary between the first portion 271 and the second portion 272.

According to the above-described embodiment, the first through hole 201 disposed in a stepped portion may provide an adhesive member connecting a sealing member separated by the stepped portion. The first through hole 201 may provide the sealing member or the adhesive member to the stepped portion in which a waterproof member is difficult to dispose.

According to an embodiment, the sealing member 240 may include a first sealing tape 241 and a second sealing tape 242. The first sealing tape 241 may extend, within the first portion 271, from the first through hole 201 to a third through hole 202 disposed on a boundary between the first portion 271 and the second portion 272. The second sealing tape 242 may extend, within the second portion 272, from the first through hole 201 to the third through hole 202. The adhesive member 243 or 244 may include a first adhesive 243 connecting the first sealing tape 241 and the second sealing tape 242 through the first through hole 201 and a second adhesive 244 connecting the first sealing tape 241 and the second sealing tape 242 through the third through hole 202.

According to an embodiment, a portion of the sealing member 240 may overlap the adhesive member 243, when viewing the supporting member 170 in a direction that the first through hole 201 extends.

According to the above-described embodiment, as the sealing member 240 is connected to the adhesive member 243, it may restrict moisture from flowing into the inside of the electronic device 100 from the outside of the electronic device 100.

According to an embodiment, the supporting member 170 may further include a side wall (e.g., the side wall 310 of FIG. 3). The side wall 310 may protrude, along the first through hole 201, from a surface of the supporting member 170 in a direction opposite to a direction facing the foldable display 130.

The magnet 211 may further include a body (e.g., the body 601 of FIG. 6A) and a wing (the wing 602 of FIG. 6B). The body may extend along the side wall 310 and contact the surface. The wing may extend from the body 601 toward the first through hole 201.

Since the magnet 211 according to the above-described embodiment may be disposed to overlap the first through hole 201, it may provide a strong magnetic force. The magnet 211 providing the strong magnetic force may maintain the folded state of the foldable electronic device.

The supporting member 170 may further include a non-conductive portion and a conductive portion forming the side wall 310.

According to the above-described embodiment, the side wall 310 including the conductive portion may have relatively high rigidity. The side wall 310 may provide a stable seating of the magnet based on the high rigidity, and may prevent damage to the display due to the magnet.

According to an embodiment, a protruding length of a portion of the side wall 310 in contact with the body 601 may be different from a protruding length of another portion of the side wall 310.

According to an embodiment, the wing 602 may become thinner farther away from the body 601.

The magnet according to the above-described embodiment may have various shapes according to a surrounding environment in which the magnet is disposed.

According to an embodiment, the foldable display 130 may further include an extension panel 230.

The extension panel may be bent to face the display panel, which provides visual information to outside of the electronic device, and may extend toward the folding axis 137 of the foldable display 130.

The extension panel 230 may be disposed at a periphery portion of the supporting member 170 far from the folding axis 137.

According to an embodiment, the sealing member 240 may include a first sealing tape 241 and a second sealing tape 242.

The first sealing tape 241 may be disposed between the extension panel 230 and the supporting member 170.

The second sealing tape 242 may be disposed between the display panel and the supporting member 170 and be spaced apart from the first sealing tape 241.

The adhesive member 243 may connect the first sealing tape 241 and the second sealing tape 242.

According to the above-described embodiment, sealing tapes spaced apart from the stepped portion through the adhesive member 243 may be connected. The sealing tapes connected to the adhesive member may restrict moisture from flowing into the inside of the electronic device by forming a closed curve.

According to an embodiment, a diameter of the first through hole 201 may be different from a diameter of the second through hole 213.

According to an embodiment, the magnet 211 may cover a portion of the first through hole 201.

According to an embodiment, further include another magnet 221 disposed within the second housing 120 and configured to maintain a folded state of the foldable electronic device 100 by interacting with the magnet 211, when the foldable electronic device 100 is folded.

The magnet according to the above-described embodiment may maintain the folded state of the electronic device through an interaction with a facing magnet. The electronic device may be maintained in the stable folded state through the magnets.

According to an embodiment, a foldable electronic device 100 may include a first housing 110, a second housing 120, and a foldable display 130.

The second housing 120 may be pivotably coupled to the first housing 110. The foldable display 130 may form at least a portion of a front surface of the first housing 110 and a front surface of the second housing 120. The foldable display 130 may be configured to be bent in a folded state of the foldable electronic device 100.

The foldable electronic device 100 may further include a first supporting member 170. The first supporting member 170 may include a first through hole 201. The first supporting member 170 may be disposed in the first housing 110.

The foldable electronic device 100 may further include a second supporting member 180. The second supporting member 180 may be disposed in the second housing 120.

The foldable electronic device 100 may further include a sealing member. The sealing member may further include the first through hole 201.

The foldable electronic device 100 may further include a first magnet 211. The first magnet 211 may be contacted on the first supporting member 170.

The foldable electronic device 100 may further include a second magnet 221. The second magnet 221 may be contacted on the second supporting member 180 and configured to maintain the folded state of the foldable electronic device 100 in conjunction with the first magnet 211.

The first magnet may include a second through hole 213 arranged with respect to the first through hole 201 for the sealing member 240, 241, 242, 243, or 244 inserted into the first through hole 201.

According to an embodiment, the first supporting member 170 may include a first portion 271 and a second portion 272 having a height different from the first portion 271. The first through hole 201 may be disposed on a boundary between the first portion 271 and the second portion 272.

According to an embodiment, the sealing member 240, 241, 242, 243, or 244 may include a first sealing member 241, a second sealing member 242, a third sealing member 243, and a fourth sealing member 244.

According to an embodiment, the first sealing member 241 may extend from the first through hole 201 to a third through hole disposed on the boundary between the first portion 271 and the second portion 272, within the first portion 271.

According to an embodiment, the second sealing member 242 may extend from the first through hole 201 to the third through hole, within the second portion 272.

According to an embodiment, the third sealing member 243 accommodated in the first through hole 201 may connect the first sealing member 241 and the second sealing member 242.

According to an embodiment, the fourth sealing member 244 accommodated in the third through hole may connect the first sealing member 241 and the second sealing member 242.

According to an embodiment, the internal space defined by the sealing member, the foldable display 130, and the first supporting member 170 may be isolated from outside of the foldable electronic device 100.

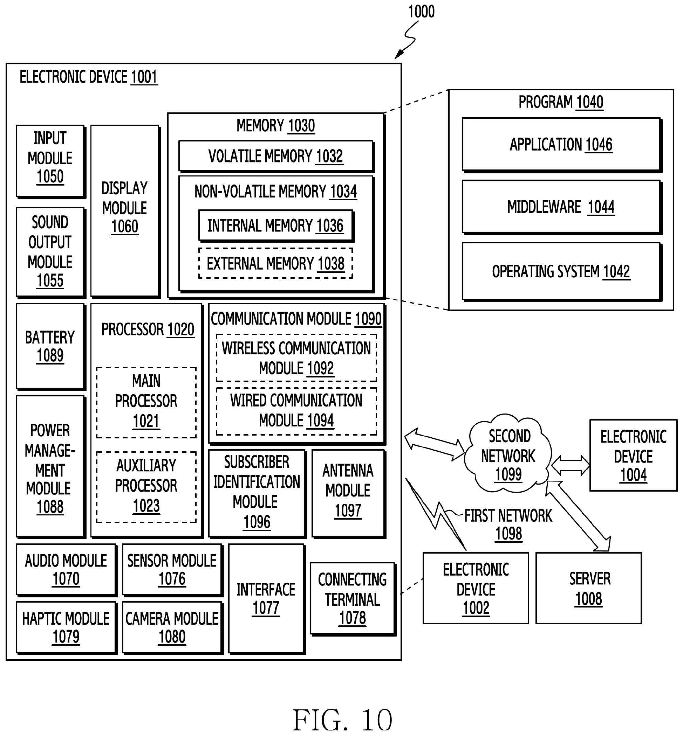

FIG. 10 is a block diagram illustrating an electronic device 1001 in a network environment 1000 according to various embodiments.

Referring to FIG. 10, the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module(SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to an embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to an embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth^{™}, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 1064dB or less) for implementing mMTC, or U-plane latency (e.g., 0.5ms or less for each of downlink (DL) and uplink (UL), or a round trip of 10ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 or 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In another embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1040) including one or more instructions that are stored in a storage medium (e.g., internal memory 1036 or external memory 1038) that is readable by a machine (e.g., the electronic device 1001). For example, a processor (e.g., the processor 1020) of the machine (e.g., the electronic device 1001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device (100), comprising:
a first housing (110);
a second housing (120);
a foldable display (130) forming at least a portion of a front surface of the first housing (110) and a front surface of the second housing (120) and configured to be bent in a folded state of the foldable electronic device (100);
a supporting member (170) disposed in the first housing (110) to support the foldable display (130) and including a first through hole (201);
a magnet (211) disposed on a corner portion of the supporting member (170) to maintain the folded state of the foldable electronic device (100) and including a second through hole (213);
a sealing member (240) disposed between the foldable display (130) and the supporting member (170); and
an adhesive member (243) contacted with the sealing member (240) and the foldable display (130) to isolate an internal space defined by the sealing member (240), the foldable display (130), and the supporting member (170) from outside of the electronic device,
wherein the adhesive member (243) is visible from a rear surface of the supporting member (170) through the first through hole (201) and the second through hole (213).

2. The foldable electronic device (100) according to claim 1, wherein the adhesive member (243) is accommodated in at least a portion of the first through hole (201), and
wherein the adhesive member (243) and the sealing member (240) form a closed curve extending along a boundary of the internal space, when viewing the supporting member (170) vertically.

3. The foldable electronic device (100) according to claim 1 or claim 2, wherein the supporting member (170) is disposed between the magnet (211) and the foldable display (130), and
wherein the corner portion is a corner portion among corner portions of the supporting member (170) far from a folding axis (137) of the foldable display (130).

4. The foldable electronic device (100) according to any one of claims 1 to 3, wherein the adhesive member (243) and the sealing member (240) restrict moisture reaching between the display and the supporting member (170) from flowing into the internal space.

5. The foldable electronic device (100) according to any one of claims 1 to 4, wherein the supporting member (170) includes a first portion (271) and a second portion (272) having a height different from the first portion (271), and
wherein the first through hole (201) is disposed on a boundary between the first portion (271) and the second portion (272).

6. The foldable electronic device (100) according to claim 5, wherein the sealing member (240) includes a first sealing tape (241) and a second sealing tape (242),
wherein the first sealing tape (241) extends, within the first portion (271), from the first through hole (201) to a third through hole (202) disposed on a boundary between the first portion (271) and the second portion (272),
wherein the second sealing tape (242) extends, within the second portion (272), from the first through hole (201) to the third through hole (202), and
wherein the adhesive member (243) includes a first adhesive (243) connecting the first sealing tape (241) and the second sealing tape (242) through the first through hole (201) and a second adhesive (244) connecting the first sealing tape (241) and the second sealing tape (242) through the third through hole (202).

7. The foldable electronic device (100) according to any one of claims 1 to 6, wherein a portion of the sealing member (240) overlaps the adhesive member (243), when viewing the supporting member (170) in a direction that the first through hole (201) extends.

8. The foldable electronic device (100) according to any one of claims 1 to 7, wherein the supporting member (170) further includes a side wall (310) protruding, along the first through hole (201), from a surface of the supporting member (170) in a direction opposite to a direction facing the foldable display (130), and
wherein the magnet (211) further includes a body extending along the side wall (310) and contacting the surface and a wing (602) extending from the body toward the first through hole (201).

9. The foldable electronic device (100) according to claim 8, wherein the supporting member (170) further includes a non-conductive portion and a conductive portion forming the side wall (310).

10. The foldable electronic device (100) according to claim 8, wherein a protruding length of a portion of the side wall (310) in contact with the body (601) is different from a protruding length of another portion of the side wall (310).

11. The foldable electronic device (100) according to claim 8, wherein the wing (602) becomes thinner farther away from the body (601).

12. The foldable electronic device (100) according to any one of claims 1 to 11, wherein the foldable display (130) further includes a display panel providing visual information to outside of the electronic device, and an extension panel (230), within the first housing (110), bent to face the display panel and extending toward disposed the folding axis (137) of the foldable display (130), and
wherein the extension panel (230) is disposed at a periphery portion of the supporting member (170) far from the folding axis (137).

13. The foldable electronic device (100) according to claim 12, wherein the sealing member (240) includes a first sealing tape (241) and a second sealing tape (242),
wherein the first sealing tape (241) is disposed between the extension panel (230) and the supporting member (170),
wherein the second sealing tape (242) is disposed between the display panel and the supporting member (170) and is spaced apart from the first sealing tape (241), and
wherein the adhesive member (243) connects the first sealing tape (241) and the second sealing tape (242).

14. The foldable electronic device (100) according to any one of claims 1 to 13, wherein a diameter of the first through hole (201) is different from a diameter of the second through hole (213).

15. The foldable electronic device (100) according to any one of claims 1 to 14, wherein the magnet (211) covers a portion of the first through hole (201).
